# EUROPÄISCHE PATENTSCHRIFT

(11) **EP 3 123 052 B1**
(45) Veröffentlichungstag und Bekanntmachung des Hinweises auf die Patenterteilung: **14.11.2018**
(21) Anmeldenummer: 15721544.3
(22) Anmeldetag: 24.03.2015
(51) Int. Cl.: F16D 13/75

(54) **SPINDELHALTERUNG FÜR EINE NACHSTELLEINRICHTUNG**
SPINDLE RETAINER FOR A READJUSTMENT DEVICE
SUPPORT DE BROCHE POUR DISPOSITIF DE RATTRAPAGE

(30) Priorität: 27.03.2014 DE 102014205775
(43) Veröffentlichungstag der Anmeldung: 01.02.2017
(73) Patentinhaber: Schaeffler Technologies AG & Co. KG, 91074 Herzogenaurach (DE)
(72) Erfinder: VOORSPOELS, Ludovic, F-67410 Drusenheim (FR); FOHRER, Thierry, F-67850 Offendorf (FR); MERCKLING, Tony, F-67340 Schillersdorf (FR); SCHNEIDER, Michael, 76534 Baden-Baden (DE)
(86) Internationale Anmeldenummer: PCT/DE2015/200191
(87) Internationale Veröffentlichungsnummer: WO 2015/144167

(56) Entgegenhaltungen:
- DE-A1-102010 025 330
- DE-A1-102010 035 121
- DE-A1-102011 015 642

## Beschreibung

Die Erfindung betrifft eine Spindelhalterung für eine Nachstelleinrichtung sowie eine Nachstelleinrichtung für eine Reibkupplung, insbesondere für ein Kraftfahrzeug.

Im Stand der Technik sind Nachstelleinrichtungen bekannt, wie zum Beispiel aus der DE 10 2010 035 121 A1, DE 10 2010 025 330 A1 oder DE 10 2011 015642 A1, bei denen eine Spindelwelle mit einem Spindeltrieb verwendet wird. Hierbei wird der Spindeltrieb über ein Antriebsritzel angetrieben, und über den Spindeltrieb wird eine Spindelmutter translatorisch bewegt. Die Spindelwelle ist dabei an zwei Stellen radial gelagert, wobei die Spindelwelle zugleich die Fliehkräfte aufgenommen werden müssen, denen die Nachstelleinrichtung durch den Anbau auf einem rotierenden Bauteil, bevorzugt einer motorseitigen Anpressplatte, der Reibkupplung unterliegt. Bisher bekannt sind Halterungen für eine Spindelwelle, bei der die Spindelwelle durch Öffnungen hindurchgeführt werden muss und in zumindest eine Öffnung zur Fixierung der Spindelwelle zumindest eine Buchse eingeführt werden muss. Es hat sich jedoch gezeigt, dass eine solche Buchse beim Betrieb einer übermäßigen Belastung, insbesondere infolge der Fliehkräfte, unterliegen und Ermüdungsbrüche aufweisen können.
Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.
Die Erfindung betrifft eine Spindelhalterung für eine Nachstelleinrichtung, welche zumindest die folgenden Komponenten aufweist:
- eine Aufnahme für eine Spindelwelle mit einem ersten Ende und einem zweiten Ende, wobei die Aufnahme eine erste Öffnung und eine zweite Öffnung aufweist, wobei die erste Öffnung eine passgenaue erste Lagerhalterung für das erste Ende der Spindelwelle bildet und die zweite Öffnung derart eingerichtet ist, dass das zweite Ende der Spindelwelle in die zweite Öffnung einschwenkbar ist, um in eine Endmontageposition gebracht zu werden;
- eine Sperreinrichtung, welche eine dritte Öffnung für das zweite Ende aufweist, wobei die dritte Öffnung eine passgenaue zweite Lagerhalterung für die Endmontageposition der Spindelwelle bildet, und wobei die Sperreinrichtung relativ zu der Aufnahme fixierbar ist; und
- eine Verbindungsfläche, über welche die Spindelhalterung mit einem Bauteil einer Reibkupplung, bevorzugt mit einer Anpressplatte, verbindbar ist.
Die Spindelhalterung ist dazu eingerichtet, eine Spindelwelle an einem Bauteil einer Reibkupplung zu halten, so dass die Spindelwelle einen Nachstellring einer Nachstelleinrichtung infolge einer translatorischen Bewegung einer Spindelmutter verdreht, und so eine Nachstellung bewirken kann. Hierzu weist die Spindelhalterung eine Aufnahme auf, in die die Spindelwelle eingeführt werden kann, wobei eine erste und zweite Öffnung vorgesehen sind. Die Spindelwelle ist mit einem ersten Ende in die erste Öffnung einführbar, wobei die erste Öffnung eine passgenaue erste Lagerhalterung bildet. Das heißt, das erste Ende braucht keine zusätzliche Buchse oder sonstige Bauteile um die Spindelwelle radial, und bevorzugt auch axial, zu lagern sowie die Spindelwelle an diesem Ende gegen die Fliehkräfte zu lagern. Weiterhin ist eine zweite Öffnung gebildet, die keine passgenaue Lagerhalterung bildet, sondern vielmehr eine vergrößerte Öffnung in Bezug auf das zweite Ende der Spindelwelle bildet, so dass die Spindelwelle nach der Einführung des ersten Endes in die erste Öffnung in die zweite Öffnung einschwenkbar ist. Danach ist die Spindelwelle (in etwa) in eine Endmontageposition gebracht, in der die Spindelwelle aber erst durch die Anbringung der Sperreinrichtung fixiert wird.

Die Sperreinrichtung weist eine dritte Öffnung auf, welche eine passgenaue zweite Lagerhaltung für das zweite Ende der Spindelwelle bildet. Darüber wird die Spindelwelle wie in der ersten Lagerhalterung in der ersten Öffnung der Aufnahme zumindest radial und gegen die Fliehkraft gelagert und bildet zumindest, wenn die erste Lagerhalterung keine axiale Lagerung bildet zudem eine axiale Lagerung. Die Sperreinrichtung wird nach dem Einschwenken des zweiten Endes in die zweite Öffnung der Aufnahme über das zweite Ende der Spindelwelle geführt. Nach der Fixierung der Sperreinrichtung relativ zur Aufnahme ist die Spindelwelle endgültig fixiert. Das heißt, sie ist noch um ihre Achse rotierbar, jedoch axial und radial gesichert sowie auch gegen Fliehkräfte bei einer Anbringung auf einem rotierenden Bauteil einer Reibkupplung.

Weiterhin weist die Spindelwelle eine Verbindungsfläche auf, über die sie mit einem Bauteil der Reibkupplung verbindbar ist, so dass die Spindelwelle zum Einsatz in einer Nachstelleinrichtung eingebaut in einer Reibkupplung verwendbar ist. Diese Spindelhalterung hat den Vorteil, dass auf eine Buchse verzichtet werden kann und zudem die Bruchanfälligkeit der Spindelhalterung reduziert ist. Darüber hinaus kann die Sperreinrichtung gegen Fliehkräfte optimiert werden und muss nicht an eine Geometrie einer Durchgangsöffnung angepasst werden. Vielmehr wird die Sperreinrichtung besonders bevorzugt gegenüberliegend der Erstreckung der Spindelwelle hin zur ersten Öffnung hinter der zweiten Öffnung angeordnet, und erstreckt sich nicht in die zweite Öffnung hinein.

Gemäß einer weiteren vorteilhaften Ausführungsform der Spindelhalterung ist die zweite Öffnung zur Verbindungsfläche hin radial eröffnet.

Durch die radiale Eröffnung der zweiten Öffnung ist die Spindelwelle besonders leicht in die zweite Öffnung einschwenkbar. Besonders bevorzugt kann die zweite Öffnung somit an den Seiten, die nicht eröffnet sind, eine radiale und axiale Führung der Spindelwellen ausüben. Besonders vorteilhaft ist die zweite Öffnung zur Verbindungsfläche hin eröffnet, so dass die Spindelwelle bei einer Beschädigung der Sperreinrichtung oder bei einer fehlerhaften Montage nicht in den Kupplungsraum eindringen kann, sondern durch das (massive) Bauteil, an dem die Spindelhalterung über die Verbindungsfläche verbunden ist, zumindest im Schwenkwinkel sicher gehalten wird.

Gemäß einer weiteren vorteilhaften Ausführungsform der Spindelhalterung weist die Sperreinrichtung eine Anbindungsfläche auf, welche in einem rechten Winkel zur dritten Öffnung ausgerichtet ist, und mit welcher die Sperreinrichtung an ein Bauteil einer Reibkupplung, bevorzugt an eine Anpressplatte, anbindbar ist.

Über die Anbindungsfläche ist die Sperreinrichtung leicht mit dem Bauteil der Reibkupplung verbindbar, besonders bevorzugt mit demselben Bauteil, mit dem auch die Spindelhalterung befestigt ist. Die Sperreinrichtung wird nicht über die zweite Öffnung gehalten, sondern ist separat über ihre Anbindungsfläche befestigt und stellt somit eine selbständige Einheit zur Lagerung des zweiten Endes der Spindelwelle dar. Ganz besonders bevorzugt wird die Sperreinrichtung über die übrige Spindelhalterung mittels der Verbindungsfläche mit dem Bauteil der Reibkupplung verbunden. Zum Beispiel wird ein Niet durch die Sperreinrichtung und die Verbindungsfläche in das Bauteil eingeführt und somit wird auf einen zusätzlichen Niet verzichtet.

Gemäß einer weiteren vorteilhaften Ausführungsform der Spindelhalterung ist die Aufnahme, und bevorzugt die Sperreinrichtung, als Blech geformt, wobei die Öffnungen in einem Abschnitt eingebracht sind, welcher zu der Verbindungsfläche im rechten Winkel gekantet ist.

Bei dieser vorteilhaften Ausführungsform ist die Spindelhalterung beziehungsweise die Aufnahme und die Sperreinrichtung als Blechteile geformt, wobei die erste Öffnung, die zweite Öffnung und die dritte Öffnung in einem 90° gekantete Abschnitt ein Bezug auf die Verbindungsfläche angeordnet sind. Solche Bauteile sind besonders einfach zu fertigen, weil sich die Fertigungsschritte auf einen Stanzvorgang und einen Kantvorgang beschränken. Darüber hinaus ist das Material kostengünstig und durch die vorgegebene Form leicht in eine gewichtssparende und stabile Form bringbar. Zudem sind die hier vorgeschlagenen Fertigungsverfahren besonders günstig und wenig aufwendig in der mechanischen Bauteilauslegung. Ganz besonders bevorzugt wird die Sperreinrichtung dabei als ein in die Aufnahme einlegbarer Winkel ausgeführt, der eine zur Verbindungsfläche parallele Anbindungsfläche aufweist, durch das ein Befestigungselement, zum Beispiel ein Niet geführt wird und an dessen senkrechter Fläche in Bezug auf die ebene Verwendungsfläche die dritte Öffnung mit ihrem Zentrum in Deckung mit der zweiten Öffnung gebracht wird.

Gemäß einem weiteren Aspekte der Erfindung wird auch eine Nachstelleinrichtung für eine Reibkupplung vorgeschlagen, welche zumindest die folgenden Komponenten aufweist:
- einen verdrehbaren Nachstellring mit zumindest einer ersten Rampe;
- ein Gegenelement mit zumindest einer zweite Rampe, wobei das Gegenelement und der Nachstellring mit ihren jeweiligen Rampen aufeinandergesetzt eine Gesamthöhe bilden, wobei die Gesamthöhe mittels eines Verdrehens des Nachstellrings mittels der zumindest einen ersten Rampe zusammen mit der zumindest einen zweiten Rampe veränderbar ist;
- eine Spindelwelle mit einem Antriebsritzel und einem Spindeltrieb mit einer Spindelmutter, wobei bei einem Antreiben des Spindeltriebs mittels des Antriebsritzels die Spindelmutter translatorisch bewegbar ist, und wobei mittels einer translatorischen Bewegung der Spindelmutter der Nachstellring verdrehbar ist; und
- eine Spindelhalterung gemäß der obigen Beschreibung, die dazu eingerichtet ist, die Spindelwelle aufzunehmen und an einem Bauteil einer Reibkupplung, bevorzugt einer Anpressplatte, zu befestigen.

Die Nachstelleinrichtung für eine Reibkupplung ist dazu vorgesehen, ein Nachlassen der Dicke des Reibbelags einer Reibkupplung infolge von Verschleiß derart auszugleichen, dass der Abstand zwischen den Reibpartnern, zum Beispiel einer Anpressplatte und einer korrespondierenden Reibscheibe, zwischen denen zumindest ein Reibbelag vorgesehen ist, (nahezu) konstant gehalten wird, während zugleich der Einrückweg der Betätigungsvorrichtung für die Reibkupplung ebenfalls (nahezu) konstant gehalten wird. Dies wird dadurch erreicht, dass die Nachstelleinrichtung eine Gesamthöhe aufweist, die mit Hilfe von zwei aufeinander liegenden Rampen durch eine Verdrehung des Nachstellrings eine Veränderung der Gesamthöhe bewirken. Das Gegenelement ist dabei bevorzugt in die Anpressplatte der Reibkupplung integriert, so dass also die zumindest eine zweite Rampe eine Oberflächengestaltung der Rückseite der Anpressplatte bildet. Es sei darauf hingewiesen, dass es lediglich vorteilhaft ist, den Nachstellring zu verdrehen anstatt das Gegenelement zu verdrehen, insbesondere wenn es in die Anpressplatte integriert ist. Grundsätzlich ist auch eine Verdrehung des Gegenelements gegenüber einem starren Nachstellring mit der hier vorgeschlagenen Erfindung kompatibel.

Zum gesteuerten Verdrehen des Nachstellrings, insbesondere bei einer weggesteuerten Nachstelleinrichtung, ist eine Spindelwelle mit einem Antriebsritzel vorgesehen, wobei das Antriebsritzel bei einer Zunahme des Abstands zwischen der Anpressplatte und der korrespondierenden Reibscheibe beziehungsweise bei einer abnehmenden Anpresskraft angetrieben wird, so dass der Spindeltrieb, welcher auf der Spindelwelle angeordnet ist, um ein Stück gedreht wird, und somit eine translatorische Bewegung einer Spindelmutter bewirkt wird. Die Spindelmutter greift dabei direkt oder mittelbar in den verdrehbaren Nachstellring ein, so dass die translatorische Bewegung der Spindelmutter in eine Verdrehung des Nachstellrings übersetzt wird. Weil die Spindelwelle bevorzugt dabei auf dem Gegenelement befestigt wird, welches somit das Innenlager für die Verdrehung des Nachstellrings bildet, wird die Spindelwelle mit dem Gegenelement rotiert, wodurch die Spindelwelle hohen Zentripetalkräften unterliegt. Die hier vorgeschlagene Spindelhalterung ist besonders robust gegenüber einer Fliehkraftbelastung der Lagerhalterung für die Spindelwelle, und darüber hinaus besonders leicht zu montieren. Darüber hinaus hat die Spindelhalterung einen Einfluss auf die Führung der Nachstelleinrichtung, so dass die Spindelhalterung mit einer im Übrigen konventionellen Nachstelleinrichtung verbindbar ist.

Gemäß einem weiteren Aspekt der Erfindung wird eine Reibkupplung mit einer Rotationsachse zum lösbaren Verbinden einer Abtriebswelle mit einem Antriebsstrang vorgeschlagen, welcher zumindest die folgenden Komponenten aufweist:
- zumindest ein Reibpaket mit zumindest einer Anpressplatte und zumindest einer korrespondierenden Reibscheibe, wobei zwischen der zumindest einen Anpressplatte und der zumindest einen korrespondierenden Reibscheibe zumindest ein verschleißbarer Reibbelag angeordnet ist, und wobei über das Reibpaket im angepressten Zustand mittels des zumindest einen Reibbelags ein Drehmoment übertragbar ist; und
- zumindest eine Nachstelleinrichtung gemäß der obigen Beschreibung, die dazu eingerichtet ist, eine Veränderung eines Abstands zwischen der zumindest einen Anpressplatte und der zumindest einen korrespondierenden Reibscheibe bei einer abnehmenden Gesamtdicke des zumindest einen Reibbelags auszugleichen.

Reibkupplung ist dazu eingerichtet, ein Drehmoment lösbar von einer Abtriebswelle auf einen Antriebsstrang und umgekehrt zu übertragen. Dies wird in der Regel über das zumindest eine Reibpaket, wie es oben beschrieben ist, erreicht, welches eine axial verschiebbare, in der Regel mit der Abtriebswelle einer Antriebseinheit rotationsfeste, Anpressplatte aufweist, die gegen zumindest eine korrespondierende Reibscheibe pressbar ist und dann ein Drehmoment übertragen kann. Die Kraft wird hierbei durch ein Betätigungssystem erzeugt, welches direkt oder indirekt durch einen Benutzer betätigt wird. Von diesem Betätigungssystem geht die Kraft aus, die zu einer axialen Verpressung des zumindest einen Reibpakets führt. Der Kupplungsweg soll dabei für den Benutzer über den Verschleiß des zumindest einen Reibbelags möglichst konstant bleiben. Der Einrückweg vergrößert sich aber über den Verschleiß. Daher ist zwischen der Anpressplatte und der Betätigungseinrichtung eine Nachstelleinrichtung vorgesehen, die die Veränderung des Einrückwegs ausgleicht, indem zumindest ein aufeinander liegendes Rampenpaar durch Verschiebung gegeneinander eine veränderte Gesamthöhe erzeugt. Angetrieben wird die Rampenpaarung beziehungsweise der Nachstellring mit der zumindest einen ersten Rampe über eine Spindelwelle mit Antriebsritzel zur Ansteuerung und einem Spindeltrieb zur Übersetzung der Ansteuerung auf den Nachstellring. Die Spindelwelle unterliegt dabei hohen Fliehkräften, weil sie in der Regel auf einem motorseitigen Rotationselement der Reibkupplung, bevorzugt der Anpressplatte, angeordnet ist. Mit der hier vorgeschlagenen Spindelhalterung ist eine besonders einfache Montage möglich, wobei zugleich die Funktionsfähigkeit über die gesamte Lebensdauer einer Reibkupplung sichergestellt ist.

Gemäß einem weiteren Aspekt der Erfindung wird ein Verfahren zum Montieren einer Spindelwelle in einer Spindelhalterung gemäß der obigen Beschreibung vorgeschlagen, welches zumindest die folgenden Schritte umfasst:
a) Einführen der Spindelwelle mit ihrem ersten Ende in die erste Öffnung der Aufnahme;
b) Einschwenken der Spindelwelle mit ihrem zweiten Ende in die zweite Öffnung der Aufnahme;
c) Aufschieben der Sperreinrichtung mit der dritten Öffnung auf das zweite Ende der Spindelwelle; und
d) Fixieren der Sperreinrichtung relativ zur Aufnahme, wobei die Spindelwelle in einer Endmontageposition axial und radial fixiert wird.

Die Montage der Spindelwelle in der Aufnahme wird über ein Einführen der Spindelwelle mit ihrem ersten Ende in die erste Öffnung der Aufnahme begonnen, wobei die erste Öffnung eine passgenaue Lagerhalterung ist. Die Spindelwelle ist dabei bevorzugt unter einem Winkel zur Endmontageposition, bevorzugt über 15°, in die erste Öffnung einführbar. Im nächsten Schritt wird die Spindelwelle mit ihrem zweiten Ende in die zweite Öffnung der Aufnahme eingeschwenkt, wobei die Spindelwelle (in einem nicht fixierten Zustand) bereits in die Endmontageposition führbar ist. Die Bewegung der Spindelwelle ist dabei bevorzugt bereits eingeschwenkt, besonders bevorzugt ist die Spindelwelle nur noch in Einschwenkrichtung bewegbar und liegt ansonsten an der zweiten Öffnung an. Im darauffolgenden Schritt wird die Sperreinrichtung mit ihrer dritten Öffnung auf das zweite Ende der Spindelwelle aufgeschoben, wobei die Sperreinrichtung in ihrer Endposition geführt wird und die Spindelwelle bereits in ihrer Endmontageposition gehalten ist. Im drauffolgenden Schritt wird die Sperreinrichtung relativ zur Aufnahme, bevorzugt an der Aufnahme, befestigt, wobei die Spindelwelle endgültig in ihrer Endmontageposition axial und radial fixiert wird, so dass die Spindelwelle nur noch um ihre Rotationsachse verdrehbar ist. Anschließend oder gleichzeitig ist die Spindelhalterung an einem Bauteil einer Reibkupplung fixierbar. Es sei darauf hingewiesen, dass besonders bevorzugt die Fixierung der Sperreinrichtung relativ zur Aufnahme, bevorzugt an der Aufnahme, gleichzeitig mit der Fixierung der Spindelhalterung am Bauteil der Reibkupplung vorgenommen wird. Die hier vorgeschlagene Montage ist besonders einfach und fehlerrobust.

Gemäß einer weiteren vorteilhaften Ausführungsform des Verfahrens wird ein Antriebsritzel für die Spindelwelle vor Schritt a) auf der Spindelwelle montiert.

Im Stand der Technik wird die Spindelwelle durch zumindest eine der Öffnungen der Spindelhalterung hindurchgeführt, und somit ist die Montage des Antriebsritzels, oder sogar der Spindelmutter, vor der Einführung der Spindelwelle mit ihrem ersten Ende in die erste Öffnung nicht möglich, sondern muss während des Einführens in die erste Öffnung aufgebracht werden. Eine solche Montage ist schwierig und aufwendig und daher fehleranfällig. Mit dem hier vorgeschlagenen Verfahren kann die fertig montierte Spindelwelle mit Antriebsritzel, und bevorzugt mit der Spindelmutter, in die erste Öffnung eingeführt werden und anschließend in die zweite Öffnung eingeschwenkt werden. Dies erlaubt zudem, dass die Montage der Spindelwelle in einem getrennten Fertigungsschritt vorgenommen wird, der einer besseren Fehlerkontrolle unterliegen kann.

Gemäß einer weiteren vorteilhaften Ausführungsform des Verfahrens wird die Aufnahme mittels zumindest eines Befestigungselements, bevorzugt mittels zumindest eines Niets, an einem Bauteil einer Reibkupplung, bevorzugt an einer Anpressplatte, befestigt, wobei die Sperreinrichtung mittels zumindest eines der besagten Befestigungselemente der Aufnahme mit der Aufnahme verbunden wird.

Bei diesem vorteilhaften Verfahren wird die Aufnahme mit einem Befestigungselement befestigt, besonders bevorzugt nachdem die Montageschritte a) bis c) oder d) der obigen Beschreibung durchgeführt wurden. Ganz besonders bevorzugt wird die Montage an dem Bauteil der Reibkupplung gleichzeitig mit Schritt d) der obigen Beschreibung, also dem Fixieren der Sperreinrichtung relativ zur Aufnahme ausgeführt, wobei dies besonders bevorzugt mittels zumindest eines Niets ausgeführt wird. Das Befestigungselement kann aber auch zum Beispiel durch Schweißen, besonders bevorzugt Widerstandsschweißen, erzeugt werden. Mit diesem Verfahren ist die Montage der Spindelhalterung an einem Bauteil der Reibkupplung, bevorzugt an einer Anpressplatte besonders einfach und fertigungsgerecht.

Gemäß einem weiteren Aspekt der Erfindung wird auch ein Kraftfahrzeug vorgeschlagen, welche eine Antriebseinheit mit einer Abtriebswelle, einen Antriebsstrang und eine Reibkupplung gemäß der obigen Beschreibung aufweist.

Gemäß einem weiteren Aspekt der Erfindung wird auch ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Spindelhalterung erlaubt bei einer einfachen und sicheren Montage eine zuverlässige Funktionsweise bei hohen Drehgeschwindigkeiten über die gesamte Lebensdauer der Reibkupplung beziehungsweise des Kraftfahrzeugs.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine konventionelle Aufnahme mit Spindelwelle,
- Fig. 2:: eine konventionelle Aufnahme,
- Fig. 3:: ein Teil einer Spindelhalterung,
- Fig. 4:: eine Sperreinrichtung,
- Fig. 5:: ein erster Schritt der Montage einer Spindelwelle mit einer Spindelhalterung,
- Fig. 6:: ein zweiter Schritt der Montage einer Spindelwelle mit einer Spindelhalterung,
- Fig. 7:: ein dritter Schritt der Montage der Spindelwelle mit einer Spindelhalterung,
- Fig. 8:: eine Spindelhalterung auf einer Anpressplatte,
- Fig. 9:: ein Detail der Aufnahme,
- Fig. 10:: eine Reibkupplung mit Nachstelleinrichtung,
- Fig. 11:: ein Kraftfahrzeug mit Reibkupplung.

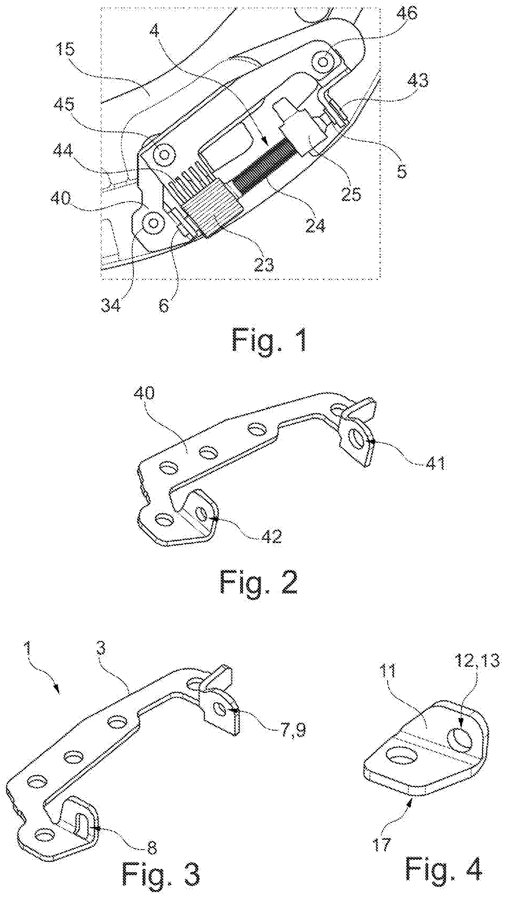

In Fig. 1 ist eine konventionelle Aufnahme 40 gezeigt, die mit einem ersten Befestigungselement 34, einem zweiten Befestigungselement 45 und einem dritten Befestigungselement 46 auf einer Anpressplatte 15 befestigt ist. Eine Spindelwelle 4 mit einem Antriebsritzel 23 und einem Spindeltrieb 24 ist mit einem ersten Ende 5 in einer Buchse 43 gehalten. In dieser Darstellung sind Sperrklinken 44 zu erkennen, die über das Antriebsritzel 23 die Lage der Spindelmutter 25 auf dem Spindeltrieb 24 der Spindelwelle 4 in einer eingestellten Position sichern.

In Fig. 2 ist die konventionelle Aufnahme 40 wie in Fig. 1 gezeigt, wobei hier die erste Öffnung 41 und die konventionelle zweite Öffnung 42 zu erkennen sind. Es wird klar, dass hierbei die Spindelwelle 4 durch die konventionelle erste Öffnung 41 hindurchgeschoben werden muss, wobei erst danach das Antriebsritzel 23 sowie die Spindelmutter 25 auf die Spindelwelle 4, wie in Fig. 1 gezeigt, aufgeführt werden kann.

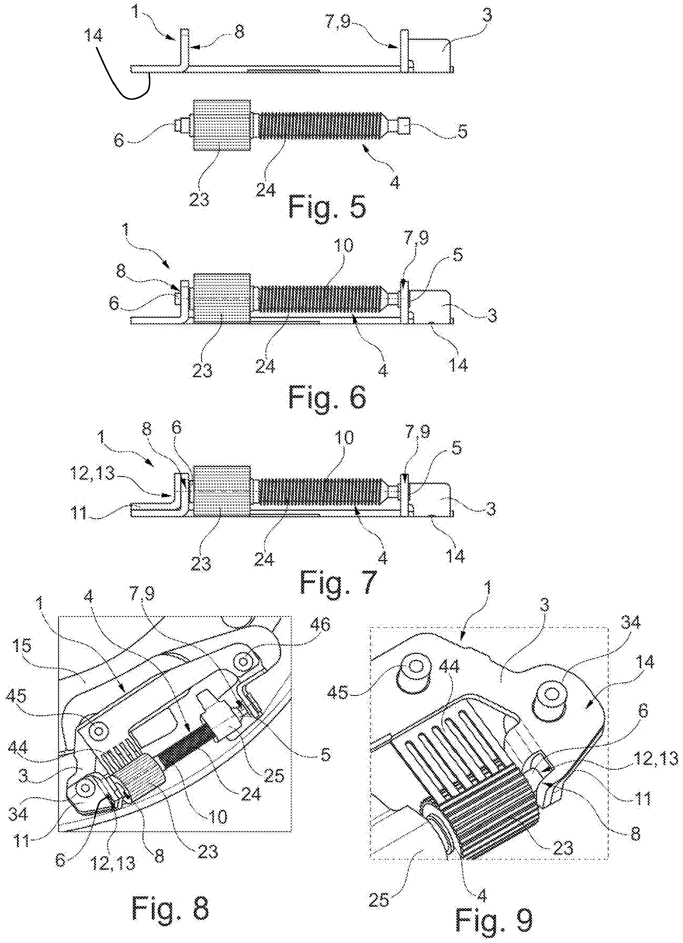

In Fig. 3 ist eine Aufnahme 3 einer Spindelhalterung 1 gemäß der Erfindung gezeigt, wobei hier die erste Öffnung 7 als passgenaue Lagehalterung 9 für die nicht dargestellte Spindelwelle 4 eingerichtet ist. Die zweite Öffnung 8 ist hier eine seitliche Eröffnung, so dass die hier nicht dargestellte Spindelwelle 4 nach einem Einführen des ersten Endes 5 in die erste Öffnung 7 in die zweite Öffnung 8 mit dem zweiten Ende 6 einschwenkbar ist (vgl. Fig. 7).

In Fig. 4 ist eine Sperreinrichtung 11 gezeigt, welche eine Anbindungsfläche 17 aufweist und eine dritte Öffnung 12, die als passgenaue zweite Lagerhalterung 13 eingerichtet ist. Die Aufnahme 3 und die Sperreinrichtung 11 sind in den Figuren 3 und 4 als Blechteile ausgebildet, die besonders günstig zu fertigen sind und ein gutes Gewichts-Stabilitäts-Verhältnis aufweisen.

In Fig. 5 ist eine Spindelhalterung 1 gezeigt, von der separat eine vollständig vormontierte Spindelwelle 4 angeordnet ist. Die Spindelhalterung 1 weist eine Aufnahme 3 auf, in der die erste Öffnung 7, die als passgenaue erste Lagerhalterung 9 ausgeformt ist, und eine zweite Öffnung 8 zum Einschwenken, wie sie in Fig. 3 zu erkennen ist. Auf der Unterseite der Spindelhalterung ist eine Verbindungsfläche 14 vorgesehen, mit der die Spindelhalterung 1 auf einem Bauteil der Reibkupplung anbringbar ist, bevorzugt einer Anpressplatte 15 (vgl. Fig. 8). Die Spindelwelle 4 mit dem montierten Antriebsritzel 23 und dem Spindeltrieb 24 ist mit ihrem ersten Ende 5 in die erste Öffnung 7 einführbar und mit dem zweiten Ende 6 in die zweite Öffnung 8 einschwenkbar, so dass sie wie in Fig. 6 gezeigt, in die Endmontageposition 10 bringbar ist.

In Fig. 7 ist gezeigt, wie die Sperreinrichtung 11 durch Aufschieben der dritten Öffnung 12 auf das überstehende zweite Ende 6 aufgebracht wird und so die Spindelwelle 4 in der Endmontageposition 10 fixiert. Hiernach ist die Spindelhalterung samt Spindelwelle auf einem Bauteil der Reibkupplung befestigbar, wie es zum Beispiel in Fig. 8 gezeigt ist.

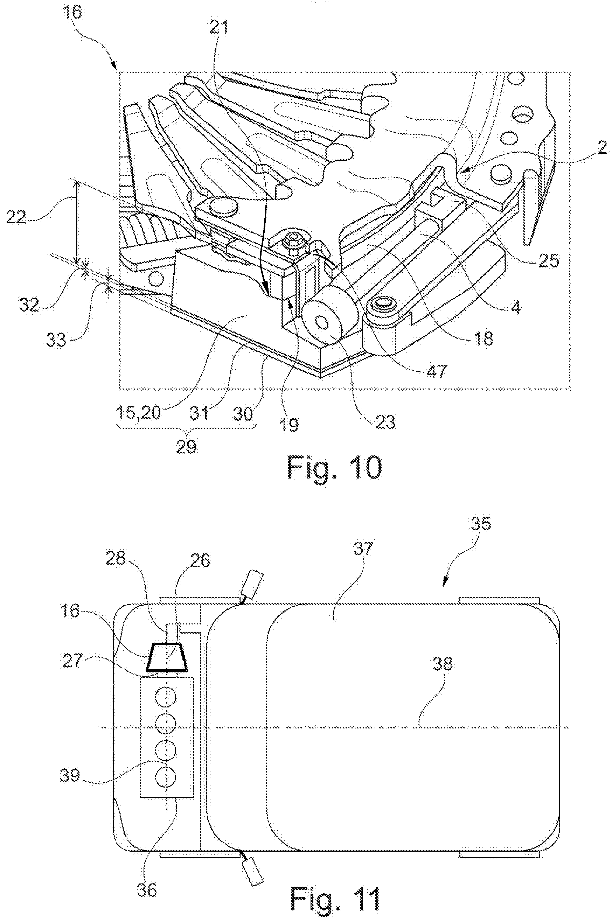

In Fig. 8 ist eine Spindelhalterung 1 gezeigt, die noch darüber hinaus eine Sperrklinke 44 aufweist, mit der die Spindelwelle 4 in einer Stellposition über das Antriebsritzel 23 gesichert wird, so dass die Spindelmutter 25 einen darüber bewegten Nachstellring 18 (hier nicht gezeigt, vergleiche zum Beispiel Fig. 10) gesichert ist. Über das erste Befestigungselement 34, das zweite Befestigungselement 45 und das dritte Befestigungselement 46 (hier als Niet ausgeführt) ist sowohl die Spindelhalterung 1 samt Sperreinrichtung 11 als auch die Antriebsklinken 44 mit der Anpressplatte 15 fixiert. Damit ist die Spindelwelle 4 endgültig in ihrer Endmontageposition 10 gelagert.

In Fig. 9 ist eine anpressplattenseitige Detailansicht der Spindelhalterung 1 wie in Fig. 8 gezeigt, wobei hier die Anpressplatte 15 für die Sichtbarkeit entfernt ist, wobei deutlich zu erkennen ist, dass das zweite Ende 6 der Spindelwelle 4 in die zweite Öffnung 8 einschwenkbar ist und über die Sperreinrichtung 11 beziehungsweise die dritte Öffnung 12, welche als passgenaue zweite Lagerhalterung 13 gebildet ist, gelagert wird. Das erste Befestigungselement 34 und das zweite Befestigungselement 45 sind hiervon unten zu erkennen, wobei sie auch hier als Niet ausgeführt sind und der hier nicht sichtbare Nietkopf die Antriebsklinken 44 beziehungsweise die Sperreinrichtung 11 mit der Aufnahme 3 (und der nicht dargestellten Anpressplatte 15) fixieren. Im Unterschied zur Fig. 8 befindet sich hier die Spindelmutter 25 in einer Stellung, bei der die Nachstelleinrichtung 2 (vergleiche Fig. 10) maximal ausgelenkt ist, so dass die Spindelmutter 25 bis zum Antriebsritzel 23 hin bewegt ist, wobei hier angemerkt werden sollte, dass dies abhängig ist von der üblicherweise verwendeten Gewinderichtung des Spindeltriebs 24 (vgl. Fig. 8).

In Fig. 10 ist ein Ausschnitt einer Reibkupplung 16 gezeigt, bei der eine Nachstelleinrichtung 2 im Detail dargestellt ist. Die hier dargestellte Nachstelleinrichtung 2 ist eine weggesteuerte Nachstelleinrichtung, auf die jedoch die Verwendung der Spindelhalterung 1, wie sie in den vorangehenden Figuren gezeigt wurde, nicht beschränkt ist. Die Spindelmutter 25 wird in Richtung des Antriebsritzels 23 bewegt, so dass der Nachstellring 18 verdreht wird. Durch diese Verdrehung des Nachstellrings 18 wird die erste Rampe 19, die auf der zweiten Rampe 21 des Gegenelements 20 aufliegt, wobei hier das Gegenelement 20 durch die Anpressplatte 15 einstückig gebildet ist, die Gesamthöhe 22 der Nachstelleinrichtung 2 verändert. Hierdurch wird ein sich verändernden Abstand 32 durch die Abnahme der Gesamtdicke 33 des Reibbelags 31 der Reibscheibe 30 ausgeglichen. Somit ist ein Stellweg für eine Betätigungseinrichtung der Reibkupplung 16 für das Reibpaket 29 trotz abnehmender Gesamtdicke 33 der Reibescheibe 30 mit Reibbelag 31 (nahezu) konstant.

In Fig. 11 ist ein Kraftfahrzeug 35 mit einer Antriebseinheit 36 gezeigt, welche mit ihrer Motorachse 39 quer zur Längsachse 38 vor der Fahrerkabine 37 angeordnet ist. Die Antriebseinheit 36 ist hier als Verbrennungskraftmaschine dargestellt, welche über eine Abtriebswelle 27 mittels einer Reibkupplung 16 mit einem hier rein schematisch dargestellten Antriebsstrang 28 verbunden ist.

Mit der hier vorgeschlagenen Spindelhalterung ist es möglich, eine vereinfachte Montage der Nachstelleinrichtung zu erreichen.

### Bezugszeichenliste

- 1: Spindelhalterung
- 2: Nachstelleinrichtung
- 3: Aufnahme
- 4: Spindelwelle
- 5: erstes Ende
- 6: zweites Ende
- 7: erste Öffnung
- 8: zweite Öffnung
- 9: erste Lagerhalterung
- 10: Endmontageposition
- 11: Sperreinrichtung
- 12: dritte Öffnung
- 13: zweite Lagerhalterung
- 14: Verbindungsfläche
- 15: Anpressplatte
- 16: Reibkupplung
- 17: Anbindungsfläche
- 18: Nachstellring
- 19: erste Rampe
- 20: Gegenelement
- 21: zweite Rampe
- 22: Gesamthöhe
- 23: Antriebsritzel
- 24: Spindeltrieb
- 25: Spindelmutter
- 26: Rotationsachse
- 27: Abtriebswelle
- 28: Antriebsstrang
- 29: Reibpaket
- 30: Reibscheibe
- 31: Reibbelag
- 32: Abstand
- 33: Gesamtdicke
- 34: Befestigungselement
- 35: Kraftfahrzeug
- 36: Antriebseinheit
- 37: Fahrerkabine
- 38: Längsachse
- 39: Motorachse

## Patentansprüche

1. Spindelhalterung (1) für eine Nachstelleinrichtung (2), aufweisend zumindest die folgenden Komponenten:
- eine Aufnahme (3) für eine Spindelwelle (4) mit einem ersten Ende (5) und einem zweiten Ende (6), wobei die Aufnahme (3) eine erste Öffnung (7) und eine zweite Öffnung (8) aufweist, wobei die erste Öffnung (7) eine passgenaue erste Lagerhalterung (9) für das erste Ende (5) der Spindelwelle (4) bildet;
- eine Verbindungsfläche (14), über welche die Spindelhalterung (1) mit einem Bauteil einer Reibkupplung (16), bevorzugt mit einer Anpressplatte (15), verbindbar ist;
**dadurch gekennzeichnet, dass** die zweite Öffnung (8) derart eingerichtet ist, dass das zweite Ende (6) der Spindelwelle (4) in die zweite Öffnung (8) einschwenkbar ist, um in eine Endmontageposition (10) gebracht zu werden;
- eine Sperreinrichtung (11), welche eine dritte Öffnung (12) für das zweite Ende (6) aufweist, wobei die dritte Öffnung (12) eine passgenaue zweite Lagerhalterung (13) für die Endmontageposition (10) der Spindelwelle (4) bildet, und wobei die Sperreinrichtung (11) relativ zu der Aufnahme (3) fixierbar ist.

2. Spindelhalterung (1) nach Anspruch 1, wobei die zweite Öffnung (8) zur Verbindungsfläche (14) hin radial eröffnet ist.

3. Spindelhalterung (1) nach Anspruch 1 oder 2, wobei die Sperreinrichtung (11) eine Anbindungsfläche (17) aufweist, welche in einem rechten Winkel zur dritten Öffnung (12) ausgerichtet ist, und mit welcher die Sperreinrichtung (11) an ein Bauteil einer Reibkupplung (16), bevorzugt an eine Anpressplatte (15), anbindbar ist.

4. Spindelhalterung (1) nach einem der vorhergehenden Ansprüche, wobei die Aufnahme (3), und bevorzugt die Sperreinrichtung (11), als Blech geformt ist, wobei die Öffnungen (7,8,12) in einem Abschnitt eingebracht sind, welcher zu der Verbindungsfläche (14) im rechten Winkel gekantet ist.

5. Nachstelleinrichtung (2) für eine Reibkupplung (16), aufweisend zumindest die folgenden Komponenten:
- einen verdrehbaren Nachstellring (18) mit zumindest einer ersten Rampe (19);
- ein Gegenelement (20) mit zumindest einer zweite Rampe (21), wobei das Gegenelement (20) und der Nachstellring (18) mit ihren jeweiligen Rampen (19,21) aufeinandergesetzt eine Gesamthöhe (22) bilden, wobei die Gesamthöhe (22) mittels eines Verdrehens des Nachstellrings (18) mittels der zumindest einen ersten Rampe (19) zusammen mit der zumindest einen zweiten Rampe (21) veränderbar ist;
- eine Spindelwelle (4) mit einem Antriebsritzel (23) und einem Spindeltrieb (24) mit einer Spindelmutter (25), wobei bei einem Antreiben des Spindeltriebs (24) mittels des Antriebsritzels (23) die Spindelmutter (25) translatorisch bewegbar ist, und wobei mittels einer translatorischen Bewegung der Spindelmutter (25) der Nachstellring (18) verdrehbar ist; und
- eine Spindelhalterung (1) nach einem der vorhergehenden Ansprüche, die dazu eingerichtet ist, die Spindelwelle (4) aufzunehmen und an einem Bauteil einer Reibkupplung (16), bevorzugt einer Anpressplatte (15), zu befestigen.

6. Reibkupplung (16) mit einer Rotationsachse (26) zum lösbaren Verbinden einer Abtriebswelle (27) mit einem Antriebsstrang (28), aufweisend zumindest die folgenden Komponenten:
- zumindest ein Reibpaket (29) mit zumindest einer Anpressplatte (15) und zumindest einer korrespondierenden Reibscheibe (30), wobei zwischen der zumindest einen Anpressplatte (15) und der zumindest einen korrespondierenden Reibscheibe (30) zumindest ein verschleißbarer Reibbelag (31) angeordnet ist, und wobei über das Reibpaket (29) im angepressten Zustand mittels des zumindest einen Reibbelags (31) ein Drehmoment übertragbar ist; und
- zumindest eine Nachstelleinrichtung (2) nach Anspruch 5, die dazu eingerichtet ist, eine Veränderung eines Abstands (32) zwischen der zumindest einen Anpressplatte (15) und der zumindest einen korrespondierenden Reibscheibe (30) bei einer abnehmenden Gesamtdicke (33) des zumindest einen Reibbelags (31) auszugleichen.

7. Verfahren zum Montieren einer Spindelwelle (4) in einer Spindelhalterung (1) nach einem der Ansprüche 1 bis 4, aufweisend zumindest die folgenden Schritte:
a) Einführen der Spindelwelle (4) mit ihrem ersten Ende (5) in die erste Öffnung (7) der Aufnahme (3);
b) Einschwenken der Spindelwelle (4) mit ihrem zweiten Ende (6) in die zweite Öffnung (8) der Aufnahme (3);
c) Aufschieben der Sperreinrichtung (11) mit der dritten Öffnung (12) auf das zweite Ende (6) der Spindelwelle (4); und
d) Fixieren der Sperreinrichtung (11) relativ zur Aufnahme (3), wobei die Spindelwelle (4) in einer Endmontageposition (10) axial und radial fixiert wird.

8. Verfahren nach Anspruch 7, wobei ein Antriebsritzel (23) für die Spindelwelle (4) vor Schritt a) auf der Spindelwelle (4) montiert wird.

9. Verfahren nach Anspruch 7 oder 8, wobei die Aufnahme (3) mittels zumindest eines Befestigungselements (34), bevorzugt mittels zumindest eines Niets, an einem Bauteil einer Reibkupplung (16), bevorzugt an einer Anpressplatte (15), befestigt wird, und wobei die Sperreinrichtung (11) mittels zumindest eines der besagten Befestigungselemente (34) der Aufnahme (3) mit der Aufnahme (3) verbunden wird.

10. Kraftfahrzeug (35) aufweisend eine Antriebseinheit (36) mit einer Abtriebswelle (27), einen Antriebsstrang (28) und eine Reibkupplung (16) nach Anspruch 6.

## Claims

1. Spindle holder (1) for an adjusting device (2), having at least the following components:
- a receptacle (3) for a spindle shaft (4) with a first end (5) and a second end (6), the receptacle (3) having a first opening (7) and a second opening (8), the first opening (7) forming an exact-fit first bearing holder (9) for the first end (5) of the spindle shaft (4);
- a connecting face (14), via which the spindle holder (1) can be connected to a component of a friction clutch (16), preferably to a pressure plate (15) ;
**characterized in that** the second opening (8) is set up in such a way that the second end (6) of the spindle shaft (4) can be pivoted into the second opening (8), in order to be moved into a final assembly position (10) ;
- a locking device (11) which has a third opening (12) for the second end (6), the third opening (12) forming an exact-fit second bearing holder (13) for the final assembly position (10) of the spindle shaft (4), and it being possible for the locking device (11) to be fixed relative to the receptacle (3).

2. Spindle holder (1) according to Claim 1, the second opening (8) being open radially towards the connecting face (14).

3. Spindle holder (1) according to Claim 1 or 2, the locking device (11) having an attaching face (17) which is oriented at a right angle with respect to the third opening (12) and by way of which the locking device (11) can be attached to a component of a friction clutch (16), preferably to a pressure plate (15).

4. Spindle holder (1) according to one of the preceding claims, the receptacle (3), and preferably the locking device (11), being formed as a metal sheet, the openings (7, 8, 12) being made in a section which is tilted at a right angle with respect to the connecting face (14).

5. Adjusting device (2) for a friction clutch (16), having at least the following components:
- a rotatable adjusting ring (18) with at least one first ramp (19);
- a counter-element (20) with at least one second ramp (21), the counter-element (20) and the adjusting ring (18) forming an overall height (22) with their respective ramps (19, 21) placed on one another, it being possible for the overall height (22) to be changed by means of the at least one first ramp (19) together with the at least one second ramp (21) by means of a rotation of the adjusting ring (18);
- a spindle shaft (4) with a drive pinion (23) and a spindle drive (24) with a spindle nut (25), it being possible for the spindle nut (25) to be moved translationally during driving of the spindle drive (24) by means of the drive pinion (23), and it being possible for the adjusting ring (18) to be rotated by means of a translational movement of the spindle nut (25); and
- a spindle holder (1) according to one of the preceding claims which is set up to receive the spindle shaft (4) and to fasten it to a component of the friction clutch (16), preferably a pressure plate (15).

6. Friction clutch (16) having a rotational axis (26) for releasably connecting an output shaft (27) to a drive train (28), having at least the following components:
- at least one friction assembly (29) with at least one pressure plate (15) and at least one corresponding friction disc (30), at least one consumable friction lining (31) being arranged between the at least one pressure plate (15) and the at least one corresponding friction disc (30), and it being possible for a torque to be transmitted via the friction assembly (29) in the pressed-on state by means of the at least one friction lining (31); and
- at least one adjusting device (2) according to Claim 5 which is set up to compensate for a change in a spacing (32) between the at least one pressure plate (15) and the at least one corresponding friction disc (30) in the case of a decreasing overall thickness (33) of the at least one friction lining (31).

7. Method for assembling a spindle shaft (4) in a spindle holder (1) according to one of Claims 1 to 4, having at least the following steps:
a) introduction of the spindle shaft (4) with its first end (5) into the first opening (7) of the receptacle (3);
b) pivoting of the spindle shaft (4) with its second end (6) into the second opening (8) of the receptacle (3);
c) pushing of the locking device (11) by way of the third opening (12) onto the second end (6) of the spindle shaft (4); and
d) fixing of the locking device (11) relative to the receptacle (3), the spindle shaft (4) being fixed axially and radially in a final assembly position (10) .

8. Method according to Claim 7, a drive pinion (23) for the spindle shaft (4) being assembled on the spindle shaft (4) before step a).

9. Method according to Claim 7 or 8, the receptacle (3) being fastened to a component of a friction clutch (16), preferably to a pressure plate (15), by means of at least one fastening element (34), preferably by means of at least one rivet, and the locking device (11) being connected to the receptacle (3) by means of at least one of the said fastening elements (34) of the receptacle (3).

10. Motor vehicle (35) having a drive unit (36) with an output shaft (27), a drive train (28) and a friction clutch (16) according to Claim 6.

## Revendications

1. Support de broche (1) pour un dispositif ajusteur (2), comportant au moins les composants suivants :
- une admission (3) pour un arbre de broche (4) doté d'une première extrémité (5) et d'une seconde extrémité (6), dans lequel l'admission (3) comporte une première ouverture (7) et une seconde ouverture (8), dans lequel la première ouverture (7) constitue un premier support (9) sur mesure à la première extrémité (5) de l'arbre de broche (4) ;
- une surface de raccordement (14) sur laquelle le support de broche (1) peut être raccordé à un composant d'un accouplement à friction (16), de préférence avec une plaque de pression (15) ;
**caractérisé en ce que** la seconde ouverture (8) est disposée de sorte que la seconde extrémité (6) de l'arbre de broche (4) peut être pivotée dans la seconde ouverture (8), afin d'être placée dans une position de montage final (10) ;
- un dispositif de verrouillage (11), comportant une troisième ouverture (12) pour la seconde extrémité (6), dans lequel la troisième ouverture (12) constitue un second support (13) sur mesure pour la position de montage final (10) de l'arbre de broche (4), et dans lequel le dispositif de verrouillage (11) peut être fixé relativement à l'admission (3).

2. Support de broche (1) selon la revendication 1, dans lequel la seconde ouverture (8) s'ouvre radialement à la surface de raccordement (14).

3. Support de broche (1) selon la revendication 1 ou 2, dans lequel le dispositif de verrouillage (11) comporte une surface de fixation (17), laquelle est agencée à angle droit par rapport à la troisième ouverture (12) et avec laquelle le dispositif de verrouillage (11) peut être fixé à un composant d'un accouplement à friction (16), de préférence avec une plaque de pression (15).

4. Support de broche (1) selon l'une des revendications précédentes, dans lequel l'admission (3), et de préférence le dispositif de verrouillage (11), sont formés de tôle, dans lequel les ouvertures (7, 8, 12) sont créées dans une section, laquelle est courbée à angle droit par rapport à la surface de raccordement (14) .

5. Dispositif ajusteur (2) pour un accouplement à friction (16), comportant au moins les composants suivants :
- une bague d'ajustage pouvant tourner (18) dotée d'au moins une première rampe (19) ;
- un élément complémentaire (20) doté d'au moins une seconde rampe (21), dans lequel l'élément complémentaire (20) et la bague d'ajustage (18) constituent avec leurs rampes respectives (19, 21) arrangées l'une sur l'autre une hauteur totale (22), dans lequel la hauteur totale (22) est modifiable au moyen d'une rotation de la bague d'ajustage (18) au moyen de la première rampe (19) et de la seconde rampe (21) conjointement ;
- un arbre de broche (4) doté d'un pignon moteur (23) et d'un actionneur à vis (24) doté d'un écrou de broche (25), dans lequel l'écrou de broche (25) est mobile en translation par entraînement de l'actionneur à vis (24) au moyen du pignon moteur (23), et dans lequel la bague d'ajustage (18) peut tourner au moyen d'un mouvement de translation de l'écrou de broche (25) et
- un support de broche (1) selon l'une des revendications précédentes, disposé de façon à accueillir l'arbre de broche (4) et à être fixé à un composant d'un accouplement à friction (16), de préférence une plaque de pression (15).

6. Accouplement à friction (16) doté d'un axe de rotation (26) pour raccorder de manière détachable un arbre entraîné (27) à un train d'entraînement (28), comportant au moins les composants suivants :
- au moins un ensemble à friction (29) doté d'au moins une plaque de pression (15) et d'au moins un disque de friction correspondant (30), dans lequel une garniture de friction (31) abrasive est disposée entre la plaque de pression (15) et le disque de friction (30) correspondant, et dans lequel un moment de rotation peut être transmis sur l'ensemble à friction (29) à l'état comprimé au moyen de la garniture de friction (31) ; et
- au moins un dispositif ajusteur (2) selon la revendication 5, disposé de façon à compenser une modification d'un écart (32) entre la plaque de pression (15) et le disque de friction correspondant (30) dû à une diminution d'épaisseur totale (33) d'une garniture de friction (31).

7. Procédé de montage d'un arbre de broche (4) dans un support de broche (1) selon l'une des revendications 1 à 4, comportant au moins les étapes suivantes :
a) introduction de l'arbre de broche (4) avec sa première extrémité (5) dans la première ouverture (7) de l'admission (3) ;
b) introduction par pivot de l'arbre de broche (4) avec sa seconde extrémité (6) dans la seconde ouverture (8) de l'admission (3) ;
c) enfilage du dispositif de verrouillage (11) avec la troisième ouverture (12) sur la seconde extrémité (6) de l'arbre de broche (4) ; et
d) fixation du dispositif de verrouillage (11) relativement à l'admission (3), dans lequel l'arbre de broche (4) est fixé de manière radiale et axiale dans une position de montage final (10).

8. Procédé selon la revendication 7, dans lequel un pignon moteur (23) pour l'arbre de broche (4) est monté sur l'arbre de broche (4) avant l'étape a).

9. Procédé selon la revendication 7 ou 8, dans lequel l'admission (3) est fixée à un composant d'un accouplement à friction (16), de préférence à une plaque de pression (15), au moyen d'au moins un élément de fixation (34), en particulier au moyen d'au moins un rivet, et dans lequel le dispositif de verrouillage (11) est raccordé à l'admission (3) au moyen d'au moins un des éléments de fixation (34) de l'admission (3).

10. Véhicule à moteur (35) comportant une unité motrice (36) dotée d'un arbre entraîné (27), d'un train d'entraînement (28) et d'un accouplement à friction (16) selon la revendication 6.
